# EUROPÄISCHE PATENTANMELDUNG

(11) **EP 0 902 274 A2**
(43) Veröffentlichungstag der Anmeldung: **17.03.1999**
(21) Anmeldenummer: 98116625.9
(22) Anmeldetag: 02.09.1998
(51) Int. Cl.: G01N 21/88

(54) **Vorrichtung zur Kontrolle von länglichen Objekten**

(30) Priorität: 12.09.1997 DE 19740050
(71) Anmelder: Engberts mess-, Steuer,- und Regelsysteme GmbH, 26188 Edewecht (DE)
(72) Erfinder: Engberts, Uwe, D-26188 Edewecht (DE); Schröfel, Burkhard, D-28329 Bremen (DE)
(74) Vertreter: Lauerwald, Jörg, Dipl.-Phys.

(57) **Zusammenfassung**

Die Erfindung betrifft eine Vorrichtung zur Kontrolle von länglichen Objekten, insbesondere von vorzugsweise mit einer Geschwindigkeit in der Größenordnung von 10 m/s quer zu ihrer Längserstreckung bewegte Objekte, bevorzugt zur Kontrolle der Ausbildung von Endbereichen elektrischer Leiter.

Der Erfindung liegt die Aufgabe zugrunde, eine Vorrichtung der genannten Gattung aufzuzeigen, die den geschilderten Anforderungen gerecht wird.

Die Aufgabe wird erfindungsgemäß durch eine Vorrichtung gelöst, die sich auszeichnet durch eine Bildaufnahmeeinrichtung zur Aufnahme eines Bildes von dem zu kontrollierenden Objekt und durch eine Positioniererkennungseinrichtung, umfassend optische Mittel zur Überwachung des für eine Bildaufnahme geeigneten und vorgesehenen Aufnahmebereiches, die zu deren Auslösung mit der Bildaufnahmeeinrichtung gekoppelt ist.

## Beschreibung

Die Erfindung betrifft eine Vorrichtung zur Kontrolle von länglichen Objekten, insbesondere von vorzugsweise mit einer Geschwindigkeit in der Größenordnung von 10 m/s quer zu ihrer Längserstreckung bewegte Objekte, bevorzugt zur Kontrolle der Ausbildung von Endbereichen elektrischer Leiter.

Insbesondere Endbereiche von elektrischen Leitern, die mit großer Arbeitsgeschwindigkeit bearbeitet werden, z.B. für eine Konfektionierung vorbereitet werden, bedürfen einer Kontrolle, z.B. der Qualität der Ausführung der Vorbereitung für die Konfektionierung, weil bei qualitativ schlechter Vorbereitung des Leiterendes die spätere Konfektionierung zwar erfolgt, jedoch der konfektionierte Leiter später nicht die erforderlichen Eigenschaften aufweist, beispielsweise ein elektrischer Kontakt beeinträchtigt ist.

Die in einer Autoelektrik zu verwendenden dünnen Drahtleiter werden beispielsweise an ihren Enden häufig mit Crimpkontakten versehen, und zwar in automatischer Weise mit entsprechenden Konfektionierautomaten, wozu sie vorher beispielsweise an ihrem zu konfektionierenden Ende glatt abgeschnitten, über eine bestimmte Weglänge abisoliert und gegebenfalls noch mit einer Verstärkungshülse oder dergleichen versehen werden müssen. Ein für die spätere Konfektionierung vorgesehener Konfektionierautomat ist beispielsweise aus der DE-OS 43 11 188.2 zu entnehmen.

Da der Konfektioniervorgang automatisch abläuft und eine eventuelle fehlerhafte Vorbereitung des Leiterendes vor der Konfektionierung nach der Konfektionierung bei Betrachtung des konfektionierten Leiterendes nicht mehr erkannt werden kann, gleichwohl aber die gewünschten elektrischen Eigenschaften nicht oder nur fehlerhaft vorliegen, ist es wünschenswert, das entsprechende Leiterende nach der Vorbereitung und vor der Konfektionierung zu kontrollieren, um jeweils festzustellen, ob der Leiter tatsächlich richtig vorbereitet worden ist. Es könnte beispielsweise der Leiter, der aus vielen dünnen Drähtchen besteht, nicht sauber abgeschnitten worden sein, so daß eines der dünnen Drähtchen heraussteht. Die dünnen Drähtchen könnten aufgebürstet oder zum Teil verbogen sein. Die Abisolierung könnte im falschen Bereich, unvollständig oder nicht weitgehend genug erfolgt sein. Eine aufgebrachte Hülse könnte an der falschen Stelle sitzen oder ebenfalls unvollständig oder fehlerhaft aufgebracht sein.

Eine Kontrolle eines solchen vorbereiteten Leiterendes ist aber kaum oder nur mit größerem Aufwand und relativ ungenau möglich. Die zu kontrollierenden Leiterenden werden nämlich mit hoher Geschwindigkeit in den Konfektionierautomaten eingegeben, und zwar mit Geschwindigkeiten in der Größenordnung von 10 m/s. Es wäre völlig unökonomisch, wenn nicht sogar unmöglich, jedes einzelne Leitungsende für eine sorgfältige Kontrolle anzuhalten. Soll aber die Kontrolle während der Bewegung in einem begrenzten Kontrollbereich erfolgen, so würde dies bedeuten, daß für eine zur Kontrolle notwendigen Messung oder dergleichen nur ein Zeitraum von wenigen Millisekunden zur Verfügung stünde. Die Kontrolleinrichtung muß also nicht nur schnell arbeiten, sondern gleichzeitig muß sie auch geradezu punktgenau arbeiten, da ja ein ganz bestimmter Bereich des Leiters kontrolliert werden soll, der sich maximal über wenige Millimeter erstreckt. Für eine derartige Kontrolle in herkömmlicher Weise Lichtschranken zu verwenden, wie dies beispielsweise bei der Kontrolle der Konfektionierung selbst erfolgt, was z.B. aus der DE-OS 44 08 499.4 bekannt ist, kommt nach alledem nicht so recht in Betracht, weil eine entsprechende Lichtschranke sehr genau einjustiert werden müßte, wobei der Bewegungsweg des zu prüfenden Leiters vielleicht gar nicht in ausreichend genauer Weise vorgegeben ist, und außerdem für die Kontrolle unterschiedlicher Ausführungsformen von zu kontrollierenden Leiterenden eine Umjustierung der entsprechenden Lichtschranke erfolgen müßte. Dazu wäre dann gegebenenfalls eine elektromechanische Feinmechanik notwendig, die nicht nur kostenaufwendig, sondern auch störungsanfällig und/oder ihrerseits ungenau wäre.

Der Erfindung liegt die Aufgabe zugrunde, eine Vorrichtung der eingangs genannten Gattung aufzuzeigen, die den geschilderten Anforderungen gerecht wird.

Die Aufgabe wird erfindungsgemäß durch eine Vorrichtung gelöst, die sich auszeichnet durch eine Bildaufnahmeeinrichtung zur Aufnahme eines Bildes von dem zu kontrollierenden Objekt und durch eine Positionserkennungseinrichtung, umfassend optische Mittel zur Überwachung des für eine Bildaufnahme geeigneten und vorgesehenen Aufnahmebereiches, die zu deren Auslösung mit der Bildaufnahmeeinrichtung gekoppelt ist.

Bei der erfindungsgemäßen Vorrichtung wird also mit einer Bildaufnahmeeinrichtung (im weitesten Sinne) eine Bildaufnahme von dem zu kontrollierenden Bereich gemacht, wobei in der Regel für die gewünschte Kontrolle eine Aufnahme der Kontur bzw. eines Schattenrisses des zu kontrollierenden Bereiches ausreicht. Wird dabei der Bildaufnahmebereich groß genug gewählt, so ist eine zu genaue Positionierung und Justierung der Bildaufnahmeeinrichtung auf den zu erwartenden Passierweg des bewegten Objektes nicht notwendig. Es reicht vielmehr aus, wenn das Bild des zu kontrollierenden Objektes zu einem geeigneten Zeitpunkt aufgenommen wird, zu dem es in dem für die Bildaufnahme vorgesehenen Bereich vorzufinden ist.

Wichtig ist also bei der erfindungsgemäßen Vorrichtung nicht so sehr eine positionsgenaue Justierung der Bildaufnahmeeinrichtung, sondern vielmehr aufgrund der Geschwindigkeit des zu kontrollierenden Objektes eine relativ genaue Zeitsteuerung des Auslösezeitpunktes der Bildaufnahmeeinrichtung, da die Bildaufnahme erfolgen muß, wenn das zu kontrollierende Objekt sich gerade im Bildaufnahmebereich befindet. Hierzu verfügt die erfindungsgemäße Vorrichtung über eine Positionserkennungseinrichtung, die erkennt, wenn das zu kontrollierende Objekt gerade im Bildaufnahmebereich befindlich ist und genau zu diesem Zeitpunkt die Bildaufnahmeeinrichtung auslöst, um die Bildaufnahme durchzuführen. Dazu verfügt die Positionserkennungseinrichtung selbst über optische Mittel, so daß optisch die Position des zu kontrollierenden Objektes erkannt wird, das seinerseits wiederum mit optischen Mitteln abgebildet werden soll. Das setzt voraus, daß vor der gewünschten Bildaufnahme die Bildaufnahmeeinrichtung in ständiger Bildaufnahmebereitschaft gehalten wird, sie also jederzeit 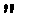 scharf" ist, um genau zum richtigen Zeitpunkt eine Bildaufnahme auslösen zu können. Es kommt daher vorrangig nicht die Verwendung sozusagen einer laufenden Kamera in Betracht, da diese ständig auch dann Bilder aufnehmen würde, wenn noch nicht oder nicht mehr ein zu kontrollierendes Objekt im Bildaufnahmebereich zu finden ist. Die eigentlich gewünschte Bildaufnahme würde dabei entweder miterfaßt. Dann würde allerdings das Sichten der Bildaufnahmen und das Herausfinden der 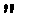 richtigen" Bildaufnahme eine Zeit in Anspruch nehmen, die für die Kontrolle gar nicht zur Verfügung steht, oder der Zeitpunkt für die richtige Bildaufnahme würde eventuell sogar in eine vorrichtungstechnisch bedingte Totzeit der Bildaufnahmeeinrichtung fallen und dadurch völlig verlorengehen.

Als optisch arbeitende Positionserkennungseinrichtung könnte, wie im weiteren noch gezeigt werden wird, eine Lichtschranke dienen, da eine solche Lichtschranke im Rahmen der erfindungsgemäßen Vorrichtung selbst keine meßtechnischen Funktionen zu erfüllen hätte, sondern lediglich eine Auslösefunktion hätte, was mit Hilfe einer Lichtschranke durchaus verwirklicht werden kann.

Eine besonders sachgerechte Steuerung und Auslösung der Bildaufnahmeeinrichtung durch die Positionserkennungseinrichtung ist dann möglich, wenn, wie bei einer Weiterbildung der Erfindung vorgesehen, die optische Achse der Bildaufnahmeeinrichtung und die optische Achse der Positonserkennungseinrichtung zusammenfallen, da dann die Positionserkennungseinrichtung das Objekt genauso 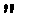 sieht" wie die Bildaufnahmeeinrichtung. Natürlich wäre es alternativ denkbar, die Positionserkennung in einem anderen Bereich durchzuführen und unter Berücksichtigung der Geschwindigkeit des Objektes eine Vorlaufzeit einzukalkulieren, nach der sich rechnerisch das Objekt im Bildaufnahmebereich befinden wird, jedoch würde eine solche Vorgehensweise wiederum sehr leicht zu Fehlern führen können, insbesondere, weil die Geschwindigkeit des Objektes vielleicht nicht sehr genau konstant gehalten werden kann.

Der Zusammenfall der optischen Achsen kann beispielsweise durch eine Art Spiegelreflexprinzip verwirklicht werden. Auch bei einer Spiegelreflexkamera wird ja durch den Spiegel erreicht, daß zunächst durch den Sucher vor der Auslösung der Kamera genau der Bildausschnitt zu sehen ist, der bei der Auslösung der Kamera durch das Objektiv auch vom Film erfaßt wird. Allerdings ist bei einer herkömmlichen Spiegelreflexkamera hierfür eine Mechanik notwendig, die mit dem Auslösen der Kamera den Spiegel wegklappt, um den Lichtweg zu dem zu belichtenden Film freizumachen.

Bei der erfindungsgemäßen Vorrichtung wird demgegenüber vorzugsweise ein Strahlteiler, vorzugsweise ein halbdurchlässiger Spiegel, in die optische Achse zur gleichzeitigen Bestrahlung der Bildaufnahmeeinrichtung und der Positionserkennungseinrichtung eingebracht. Durch diese Maßnahme werden also immer sowohl die Positionserkennungseinrichtung als auch die Bildaufnahmeinrichtung mit Licht bestrahlt. Die Auslösung der Bildaufnahmeeinrichtung geschieht nicht mechanisch durch Wegklappen des Spiegels, sondern sehr viel schneller und genauer mit einer elektrischen Pulsgabe von der Positionserkennungseinrichtung zur Bildaufnahmeeinrichtung, die durch diesen Puls elektronisch für eine Bildaufnahme ausgelöst wird.

Soweit von einer Bildaufnahme die Rede ist, soll klargestellt sein, daß eine solche Bildaufnahme nicht unbedingt eine Bildaufzeichnung im Sinne einer mehr oder weniger dauerhaften oder längerwährenden Bildspeicherung erfordert. Da die Kontrolle ja sehr schnell durchgeführt werden soll, muß die Bildaufnahme auch nur für den verhältnismäßig kurzen Zeitraum der Kontrolle selbst zur Verfügung stehen, wozu also die Bildaufnahme und die Kontrolle, d.h. der Auswertungs- und Begutachtungsschritt zeitlich dicht aneinander liegen sollen, wenn möglich sogar quasi gleichzeitig erfolgen sollen. Dennoch ist natürlich eine Bildaufzeichnung als Nebeneffekt der Bildaufnahme möglich und gegebenenfalls auch wünschenswert. Es könnte also die Bildaufnahme auch in einer Bilddarstellungseinrichtung, z.B. einem Monitor oder sogar in Form einer Hardcopy dargestellt werden, gegebenenfalls zusammen mit den bei der Kontrolle ermittelten und beurteilten Daten. Unabhängig davon könnte natürlich die erfindungsgemäße Vorrichtung als Kontrolleinrichtung auch in einen Produktionsablauf eingreifen, indem entsprechende Objekte ausgesondert werden oder zumindest durch erkennbare Signale als fehlerhaft deutlich gemacht werden.

Die Bildaufnahmeeinrichtung der erfindungsgemäßen Vorrichtung umfaßt vorzugsweise einen sogenannten und grundsätzlich bekannten CCD-Chip.

Vorzugsweise wird ein sogenannter Transfer-CCD-Chip verwendet, bei dem die durch die Belichtung gewonnene Bildinformation zu deren Sicherung, insbesondere Verhinderung einer Nachbelichtung, transferiert wird.

Wie weiter oben bereits erläutert, soll für die erfindungsgemäße Vorrichtung möglichst keine laufende Kamera verwendet werden, sondern mit der Bildaufnahmeeinrichtung soll zu einem ganz bestimmten Zeitpunkt eine Bildaufnahme durchgeführt werden, für die die Bildaufnahmeeinrichtung bereitgehalten wird. Auch nach der Durchführung der Bildaufnahme soll natürlich die Bildaufnahmeeinrichtung erst einmal nicht weiterlaufen, insbesondere nicht nachbelichten. Die gewonnene Bildaufnahme muß vielmehr im weitesten Sinne möglichst schnell fixiert werden. Dies kann bei einer sogenannten Transfer-CCD in an sich bekannter Weise auf elektronischem Wege erfolgen. Es könnte beispielsweise ein lichtempfindlicher Halbleiterchip verwendet werden, von dem nur die eine Hälfte für die Belichtung zur Verfügung steht, während sich die andere Hälfte unterhalb einer lichtundurchlässigen Maske befindet. Die durch die Belichtung im belichtbaren Bereich durch eine Bildaufnahme erfolgte Ladungsverteilung wird nach der Bildaufnahme dann dadurch gesichert, daß diese Ladungsverteilung in den unbelichtbaren Bereich verschoben und auf diese Weise vor einer Nachbelichtung gesichert wird, was sehr sehr schnell geschehen kann, so daß danach die Bildinformation in elektronischer Weise in relativer Ruhe ausgelesen werden kann.

Das Auslesen der Bildinformation erfolgt vorzugsweise zeilenweise, wobei die verwendete CCD eine sogenannte und prinzipiell bekannte 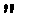 Progressiv Scan CCD" sein kann.

Da für die Kontrolle und die Auswertung der Kontrolle des zu kontrollierenden Objektes insgesamt nur eine sehr kurze Zeit zur Verfügung steht, die sich im Bereich von einigen Millisekunden bewegen kann, kann die zur Verfügung stehende Zeit nicht alleine nur mit dem Auslesen der Bildinformationen aus der Bildaufnahmeeinrichtung verwendet werden, sondern muß nach Möglichkeit auch schon für die Auswertung der Bildinformationen genutzt werden. Bei der erfindungsgemäßen Vorrichtung ist daher vorgesehen, mit Hilfe eines Prozessors die Bildinformationen nicht nur zeilenweise auszulesen, sondern jede ausgelesene Zeile im Hinblick auf ihren Informationsgehalt auch gleich zeilenweise auszuwerten und zu beurteilen, so daß das eigentliche Kontrollergebnis praktisch schon zeitgleich dann zur Verfügung steht, wenn die letzte Zeile der Bildaufnahmeeinrichtung ausgelesen worden ist. Dabei ist das Auflösungsvermögen eines CCD-Chip im Zweifel größer als für die Kontrolle überhaupt benötigt, so daß wahrscheinlich sogar ein Gut-Schlecht-Kriterium überprüft werden kann, ohne daß überhaupt alle zur Verfügung stehenden Zeilen ausgewertet werden müßten.

Eine Auslesung und Auswertung einer Zeile eines solchen CCD-Chips kann beispielsweise im Prinzip mit drei Zählern erfolgen, indem einer der Zähler die belichteten Pixel der CCD-Zeile zählt, während der zweite Zähler die Pixel bis zum Beginn des unbelichteten Bereiches und der dritte Zähler die Pixel bis zum Ende des unbelichteten Bereiches zählt. Belichtet werden ja die Pixel, die von dem zu kontrollierenden Objekt gerade nicht verdeckt werden, so daß das Bild des Objektes natürlich einen Schattenriß bzw. ein Negativ darstellt. Wenn innerhalb der belichteten Randbereiche der Beginn und das Ende des Schattenrisses erfaßt wird, erhält man daraus nicht nur die Breite des Schattenrisses, indem man die Differenz zwischen der vom dritten Zähler gezählten Pixelzahl und der vom zweiten Zähler gezählten Pixelzahl bildet, sondern durch den zweiten Zähler auch die Position des Bildes innerhalb des Bildbereiches. Werden zu der Differenz aus der Zahl des dritten Zählers und der Zahl des zweiten Zählers die vom ersten Zähler gezählten belichteten Pixel hinzugerechnet, so müßte sich als Ergebnis die Gesamtzahl der Pixel einer Zeile ergeben. Ergibt sich dagegen ein höherer Wert, so bedeutet dies, daß vom ersten Zähler auch innerhalb des Schattenrisses noch belichtete Pixel gezählt worden sind. Dies bedeutet, daß womöglich ein zu kontrollierendes Objekt in irgendeiner fehlerhaften Weise aufgespalten ist. Beispielsweise könnten an einem zu kontrollierenden Drahtende die herausragenden Drähtchen auseinandergebürstet sein oder es könnten einzelne Drähtchen fehlen, so daß das Licht auch durch diese Drahtbürste hindurchgelangt.

Eine besonders genaue und auch für die Gesamtkontrolle schnell verwendbare Information pro CCD-Zeile erhält man, wenn die CCD-Zeilen quer zu dem sich längserstreckenden Objekt orientiert sind. Beispielsweise kann bei der Auswertung einer solchen Zeile dann sehr schnell erkannt werden, ob an der vorgesehenen Stelle mit der erforderlichen Ausdehnung eine den Schattenriß verbreiternde Hülse aufgebracht ist oder nicht.

Wie bereits weiter oben angedeutet, kann als Positionserkennungseinrichtung durchaus eine Lichtschranke mit einem Lichtsender und einem Lichtempfänger verwendet werden. Mit Hilfe einer Triggereinrichtung kann die Lichtschranke die Funktion eines Auslöseelementes für die Bildaufnahmeeinrichtung übernehmen. Vorzugsweise soll die optische Achse der Lichtschranke und die optische Achse der Bildaufnahmeeinrichtung zusammenfallen, damit die Lichtschranke aus der gleichen Blickrichtung genau den Bildaufnahmebereich selbst kontrolliert. Hierfür benötigt die Lichtschranke einen Lichtsender. Dieser Lichtsender soll nach einer Weiterbildung der Erfindung gleichzeitig dafür vorgesehen sein, bei der Auslösung der Bildaufnahme das aufzunehmende Objekt in geeigneter Weise zu beleuchten. In der Praxis könnte dies so aussehen, daß der Lichtsender für die Funktion der Lichtschranke mehr oder weniger ständig leuchtet, wobei durchaus die Verwendung einer hochfrequent gepulsten Lichtquelle möglich ist und sogar vorteilhaft sein kann. Beispielsweise könnte die Lichtquelle mit 20 khz gepulst sein. Sobald von der Lichtschranke der Durchlauf eines zu kontrollierenden Objektes erkannt wird, löst die Lichtschranke die Bildaufnahmeeinrichtung aus. Dazu könnte der Lichtsender der Lichtschranke zunächst einmal kurzzeitig ausgehen, dann während der Bildaufnahme mit einer höheren Lichtintensität, aber nur über eine kurze Dauer, strahlen und nach der Bildaufnahme wieder abgeschaltet werden. Dazu ist noch einmal darauf hinzuweisen, daß zwar wegen der relativ hohen Geschwindigkeit der Bewegung des zu kontrollierenden Objektes für die Bildaufnahme selbst nur eine kurze Zeitspanne zur Verfügung steht, daß aber nicht unbedingt in entsprechend kurzer Zeit bereits das nächste zu kontrollierende Objekt nachfolgt. Es wird statt dessen sicherlich ein zeitlicher Abstand vorhanden sein, der ausreicht, das aufgenommene Bild zu sichern und die Bildaufnahmeeinrichtung wieder in Aufnahmebereitschaft zu bringen und ebenso auch die Positionserkennungseinrichtung in Bereitschaft zu setzen.

Die einzige Figur zeigt nach Art eines Blockschaltbildes den prinzipiellen Aufbau einer erfindungsgemäßen Vorrichtung.

Die Vorrichtung verfügt über eine Empfangseinheit 1 und eine Projektoreinheit 2, zwischen denen hindurch quer zu seiner Längserstreckung in die Zeichnungsebene hinein oder aus der Zeichnungsebene heraus als zu kontrollierendes Objekt der Endbereich eines Leiters 3 hindurchbewegt wird. Der Leiter 3 ist, wie zeichnerisch angedeutet, an seinem Ende ein Stück weit abisoliert, so daß ein Bereich blanker Drähte aus der Isolierung herausschaut. Beispielsweise soll vielleicht gerade die Ausführung dieser Abisolierung mit der dargestellten erfindungsgemäßen Vorrichtung kontrolliert werden.

Dazu umfaßt die Vorrichtung in der Empfangseinheit einen Lichtempfänger 4, der mit einem Lichtsender 5 in der Projektoreinheit eine Lichtschranke bildet. Das Licht des Lichtsenders 5 wird mittels eines Spiegels 6 in der Projektoreinheit 2 durch einen Kondensor 7 hindurchreflektiert. Das Licht fällt in der Empfangseinheit 1 durch ein objektiv 8, das das einfallende Licht bündelt. In den Strahlengang hineingesetzt ist ein schräggestellter halbdurchlässiger Spiegel 9, durch den das Licht einerseits auf einen CCD-Chip 10 fällt, andererseits aber auch auf den bereits angesprochenen Lichtempfänger 4 fällt.

Der CCD-Chip 10 ist Bestandteil einer Bildaufnahmeeinrichtung, die ein Bild von dem Objekt 3 aufnehmen soll. Diese Bildaufnahme muß zu einem Zeitpunkt geschehen, zu dem das relativ schnell bewegte Objekt 3 sich gerade im Bildaufnahmebereich des CCD-Chips 10 befindet. Dies wird mit der Lichtschranke 4,5 festgestellt, die insoweit als Positionserkennungseinrichtung für das Objekt 3 dient. Wird das Objekt 3 von der Lichtschranke 4,5 registriert, so wird durch die Lichtschranke die Bildaufnahmeeinrichtung ausgelöst. Dazu ist der Lichtempfänger 4 über eine Leitung 11 mit einer Steuer- und Auswerteeinheit 12 verbunden, die ihrerseits auch mit dem CCD-Chip 10 über eine Leitung 13 verbunden ist. Mittels der Verbindung des Fotoempfängers 4 mit dem CCD-Chip 10 über die Auswerte- und Steuereinheit 12 kann der Lichtempfänger 4 als Auslöser für den CCD-Chip 10 dienen, wozu ein geeigneter Trigger verwendet wird. Der Triggerimpuls wird von der Auswerte- und Steuereinheit 12 über die Leitung 13 an den CCD-Chip gegeben. Nach der Bildaufnahme kann das aufgenommene Bild vom CCD-Chip 10 prinzipiell über die Leitung 13 wiederum an die Auswerte- und Steuereinheit 12 abgegeben und dort ausgewertet werden.

Zusätzlich ist die Auswerte- und Steuereinheit 12 über eine Leitung 14 mit dem Lichtsender 5 der Lichtschranke verbunden. Hierdurch ist es möglich, daß, von der Aus-werte- und Steuereinheit 12 gesteuert, zum Zeitpunkt der Bildaufnahme durch den CCD-Chip 10 der Lichtsender 5 mit Hilfe der Projektoreinheit 2 das Objekt 3 in geeigneter Weise für die Bildaufnahme ausleuchtet. Der Lichtsender 5 hat somit eine doppelte Funktion, einmal als Lichtsender für die Lichtschranke und einmal als Beleuchtungseinrichtung für die Bildaufnahmeeinrichtung.

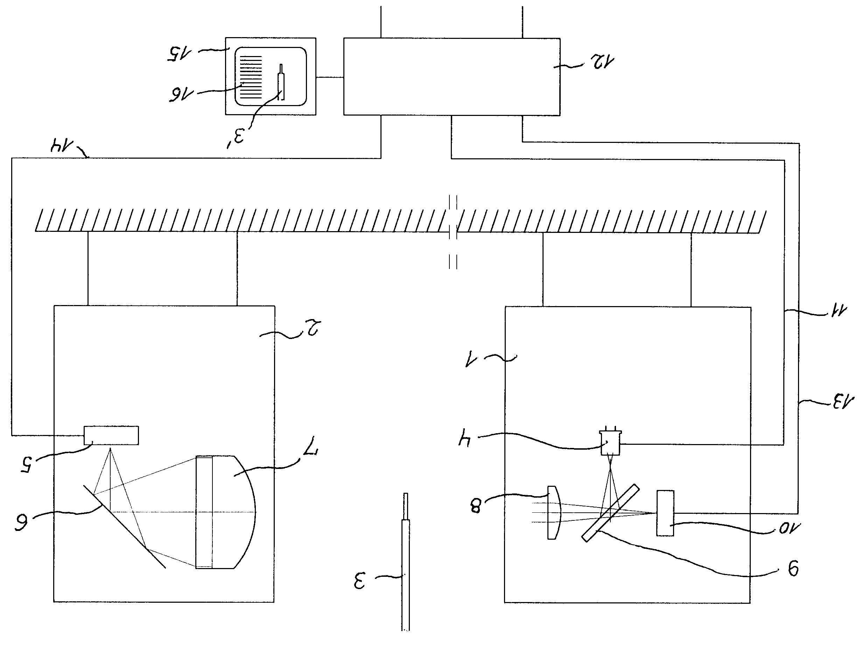

Die Auswerte- und Steuereinheit 12 ist mit einer Bilddarstellungseinrichtung 15 verbunden, die im wesentlichen aus einem Monitor besteht. In der Zeichnung ist auf dem Bildschirm des Monitores angedeutet, daß dort eine Bilddarstellung des aufgenommenen Bildes des Objektes 3 erscheinen kann. Dieses Bild ist mit 3' bezeichnet. Auf dem Bildschirm neben dem Bild 3' ist mit Zeilen angedeutet, daß dort beispielsweise zusätzlich textliche Informationen neben dem Bild 3' erscheinen können, beispielsweise anhand des Bildes 3' aufgenommene Meßdaten, deren Auswertung, Fehlerhinweise usw. Die Zeilen auf dem Bildschirm werden insgesamt mit 16 bezeichnet.

## Patentansprüche

1. Vorrichtung zur Kontrolle von länglichen Objekten, insbesondere von vorzugsweise mit einer Geschwindigkeit in der Größenordnung von 10 m/sec. quer zu ihrer Längserstreckung bewegter Objekte, bevorzugt zur Kontrolle der Ausbildung von Endbereichen elektrischer Leiter,
**gekennzeichnet durch**
eine Bildaufnahmeeinrichtung zur Aufnahme eines Bildes von dem zu kontrollierenden Objekt (3) und eine Positionserkennungseinrichtung, umfassend optische Mittel (4-9) zur Überwachung des für eine Bildaufnahme geeigneten und vorgesehenen Aufnahmebereiches, die zu deren Auslösung mit der Bildaufnahmeeinrichtung gekoppelt ist.

2. Vorrichtung nach Anspruch 1, dadurch gekennzeichnet daß die optische Achse der Bildaufnahmeeinrichtung und die optische Achse der Positionserkennungseinrichtung zusammenfallen.

3. Vorrichtung nach Anspruch 2, dadurch gekennzeichnet, daß der Zusammenfall der optischen Achse durch eine Art Spiegelreflexprinzip verwirklicht ist.

4. Vorrichtung nach Anspruch 2 oder 3, dadurch gekennzeichnet, daß ein Strahlteiler, vorzugsweise ein halbdurchlässiger Spiegel (9), in die optische Achse zur gleichzeitigen Bestrahlung der Bildaufnahmeeinrichtung und der Positionserkennungseinrichtung eingebracht ist.

5. Vorrichtung nach einem oder mehreren der vorhergehenden Ansprüche, dadurch gekennzeichnet, daß die Bildaufnahmeeinrichtung als Bildaufzeichnungseinrichtung ausgebildet ist.

6. Vorrichtung nach einem oder mehreren der vorhergehenden Ansprüche, dadurch gekennzeichnet, daß die Bildaufnahmeeinrichtung einen CCD-Chip (10) umfaßt.

7. Vorrichtung nach Anspruch 6, dadurch gekennzeichnet, daß der CCD-Chip (10) als sogenannte Transfer-CCD ausgebildet ist, bei der die durch die Belichtung gewonnene Bildinformation zu deren Sicherung, insbesondere zur Verhinderung einer Nachbelichtung, transferiert wird.

8. Vorrichtung nach Anspruch 6 oder 7, dadurch gekennzeichnet, daß der CCD-Chip (10) mit einer Auswerteeinrichtung (12) (Prozessor) in der Weise verbunden ist, daß zeilenweise eine Auslesung der in der CCD-Zeile enthaltenen Bildinformation und gleichzeitig bereits eine Auswertung dieser Bildinformation erfolgt.

9. Vorrichtung nach Anspruch 8, dadurch gekennzeichnet, daß ein Auslesen und Auswerten einer CCD-Zeile mit Zählern zum Zählen der belichteten Pixel des CCD-Chips (10) und zum Zählen der Pixel bis zum Beginn und bis zum Ende des unbelichteten Bereiches zur Bestimmung des Schattenrisses des Objektes (3) vorgesehen ist.

10. Vorrichtung nach einem oder mehreren der Ansprüche 6 bis 9, dadurch gekennzeichnet, daß die CCD-Zeilen quer zur Längserstreckung des Objektes (3) orientiert sind.

11. Vorrichtung nach einem oder mehreren der vorhergehenden Ansprüche, dadurch gekennzeichnet, daß die Positionserkennungseinrichtung im wesentlichen als Lichtschranke (4,5) mit einem Lichtsender (5) und einem Lichtempfänger (4) ausgebildet ist und zur Auslösung der Bildaufnahmeeinrichtung durch einen Trigger mit dieser verbunden ist.

12. Vorrichtung nach Anspruch 11 und vorzugsweise nach Anspruch 2, dadurch gekennzeichnet, daß der Lichtsender (5) der Lichtschranke mit einer elektronischen Steuereinrichtung (12) verbunden ist, die für den Zeitpunkt der Auslösung der Bildaufnahmeeinrichtung nach einer Erkennung eines Objektes (3) im Bildaufnahmebereich den Lichtsender (5) bezüglich seiner Lichtintensität und/oder Strahlungsdauer als Objektbeleuchtungs-Lichtquelle bereitstellt.

13. Vorrichtung nach Anspruch 5, dadurch gekennzeichnet, daß die Bildaufzeichnungseinrichtung mit einer Bilddarstellungseinrichtung (15) verbunden ist.
